Europäisches Patentamt

European Patent Office

Office européen des brevets

(11) Publication number: **0 034 864**
**B1**

## (12) EUROPEAN PATENT SPECIFICATION

(45) Date of publication of patent specification: **28.05.86**

(21) Application number: **81200185.7**

(22) Date of filing: **17.02.81**

(51) Int. Cl.⁴: **B 62 K 15/00**

(54) Demountable bicycle frame.

(30) Priority: **21.02.80 NL 8001054**

(43) Date of publication of application:
**02.09.81 Bulletin 81/35**

(45) Publication of the grant of the patent:
**28.05.86 Bulletin 86/22**

(84) Designated Contracting States:
**AT BE CH DE FR GB IT LI SE**

(56) References cited:
**FR-A-2 399 942**
**GB-A-1 149 459**

(73) Proprietor: **Technic Design One N.V.**
**J.B. Gorsiraweg 6**
**Willemstad Curaçao Nederlandse Antillen (NL)**

(72) Inventor: **de la Haye, Cornelis Franciscus**
**Mr.C.Fockstraat 13**
**NL-2225 TM Katwijk aan Zee (NL)**

(74) Representative: **Jacobson, Gerard et al**
**Octrooibureau Los en Stigter BV**
**Weteringschans 96**
**NL-1017 XS Amsterdam (NL)**

Courier Press, Leamington Spa, England.

## Description

The invention relates to a bicycle frame comprising a front fork, a back fork, a steering head sleeve, a pedal shaft sleeve, a saddle support, an oblique extension means of the back fork which is substantially in alignment with the back fork and which extends to the steering head sleeve, bar means extending from the saddle to the pedal shaft sleeve, connection means interconnecting the bar means to the back fork and back fork extension means, tensioning wires connecting the free ends of the bar means to the free end of the back fork and to the steering head sleeve.

A bicycle frame of this type is known from GB—A—1 149 459. In this known bicycle frame the back fork and the back fork extension means are integrally formed to a longitudinal member which is pivotally connected at a point intermediate its front and rear ends to the bar means which is also integrally formed and which extends from the saddle support to the pedal shaft sleeve. This pivotal connection is brought about by means of a bolt, which is locked by a nut. After the tension in the tensioning wires is released the longitudinal member and the bar means may pivot with respect to each other, but these members cannot be disconnected from each other, as it is necessary thereto to loosen the nut from the bolt. For this operation a tool will be necessary, whilst this loosening of the nut is difficult after the same has been screwed on the bolt for a considerable time.

It is an object of the present invention to provide a bicycle frame of the type as mentioned in the first paragraph, which can be demounted in a quicker and easier manner.

For this purpose the bicycle frame according to the invention is characterized in that the back fork extension means consists of an oblique tube which is separated from the back fork, whilst the oblique tube, the bar means and the back fork are at least in part interconnected by co-operating male and female members which are in condition for disengagement upon release of the tension in the wires, said connection means being secured to one of the interconnected elements and being provided with longitudinal slots which form the said female members, while the adjacent free ends of the other interconnected elements are provided with plates which form the said male members and which are each slidably insertable in one of said slots.

After releasing the tensioning wires the male and female connections may be released, whereby the diagonals become available in three or four pieces. The longest piece then is the continuous bar means between the saddle support and the pedal shaft sleeve or, if this bar means consists of two parts, the oblique tube, this largest length being substantially equal to the diameter of the wheels. The bicycle now may be packed in demounted condition in a suitcase or box, the dimensions of which correspond to those of one wheel. Transport and storage for the factory as well as for the bicycle dealer and the user are thereby much facilitated and much cheaper. Assembling and demounting may be made so simple that the user easily can carry his bicycle in his car or per public transport service.

From FR—A—2 399 942 a bicycle frame is known, wherein four tubes or rods are applied. A bracket assembly is rigidly secured to the lower end of one tube, whilst the other tubes or rods have inner ends which are pivotally connected to the bracket. The outer ends of the tubes or rods are held apart by tensioning wires. The pivotal connection is obtained by means of pins which co-operate with nuts. Therefore in this known construction a release of the tension in the tensioning wires again does not bring the tubes or rods in condition for disengagement, as a loosening of the nuts will still be required. Further, in this known construction the connection means are positioned at the location of the pedal shaft sleeve, whilst a rod extends from the pedal shaft downwardly contrary to the construction according to the invention, wherein the pedal shaft sleeve is located at the lower side of the bar means.

According to one embodiment of a bicycle frame according to the present invention the bar means are divided in an upper bar means and a lower bar means which are substantially in alignment with each other, the oblique tube, the upper bar means, the lower bar means and the back fork being interconnected by said male and female members which are in condition for disengagement upon release of the tension in the tensioning wires so as to separate the oblique tube, the upper bar means, the lower bar means and the back fork from each other.

In this embodiment the upper bar means, the lower bar means and the back fork may be provided with the plates at the free ends, which plates co-operate with the slots in the tubular sleeve, which is secured to the oblique tube.

Preferably the tensioning wires are provided in couples, while the tensioning wires of several couples extend cross-wise. In this way the rigidity of the bicycle frame against the torsional forces perpendicular to the plane of the bicycle frame is increased.

For tensioning the tensioning wires at least one of the tensioning wires or couples of tensioning wires may be provided with a tensioning device.

In this embodiment the tensioning device may comprise a rotary handle, co-operating with a cam profile or with a cam follower means, respectively.

Further it is also possible that a tensioning means is incorporated in the connection means.

The invention will hereunder be illustrated with reference to the drawing in which an embodiment as an example of the bicycle frame according to the invention is shown.

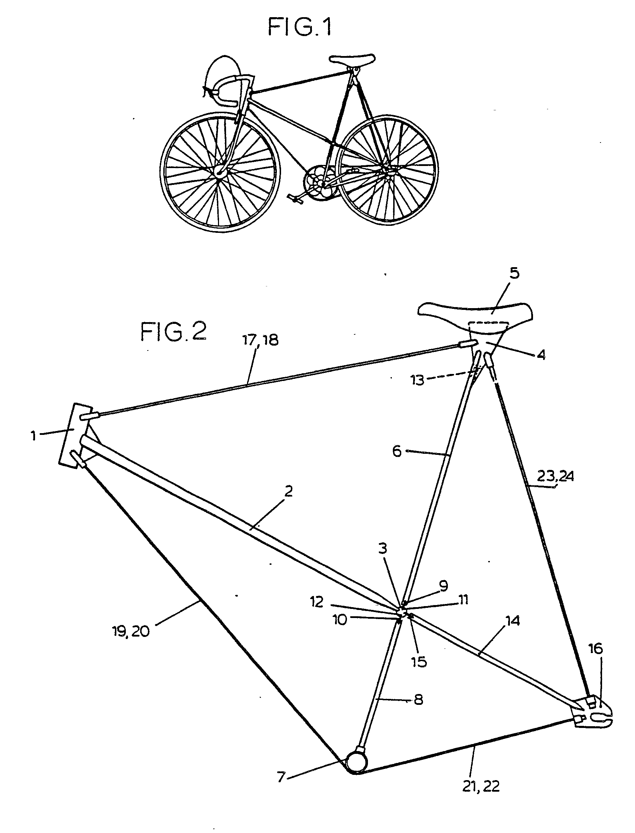

Fig. 1 shows a side view of a bicycle having the frame according to the invention.

Fig. 2 is a side view on an enlarged scale of the frame without the front fork.

Fig. 3 is a back view of the frame bars extending from the pivot point.

Fig. 4 is a plan view of the upper tensioning wires.

The frame as shown comprises a steering head sleeve 1, which is secured to or integral with an oblique tube 2 extending obliquely from said steering head sleeve downwardly and rearwardly. In the embodiment shown a transverse sleeve 3 is secured to the free end of the oblique tube 2 perpendicular to its longitudinal direction, whereto said end is somewhat flattened at that position. An upper rod 6 extends upwardly from the sleeve 3 toward a sadlle support means 4 to which a pin (not shown) for a saddle 5 may be connected. Likewise from the transverse sleeve 6 extends, downwardly, towards a pedal shaft sleeve 7 and secured thereto, a lower bar 8.

At the ends of the bars 6 and 8 adjacent the sleeve 3 a plate shaped part 9 and 10 resp. is secured, extending in the longitudinal direction of the sleeve 3. Said plates 9 and 10 are in engagement with corresponding slots 11, 12 extending in the longitudinal direction of the sleeve 3.

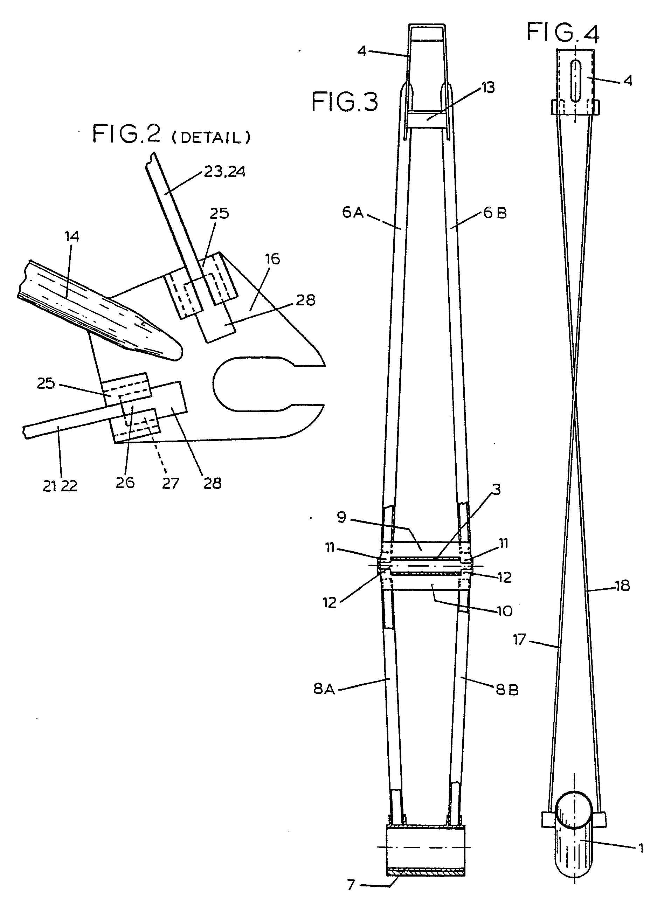

It appears from fig. 3 that the bars 6 and 8 have been doubled, i.e. the bar 6 comprises two rods or thin tubes 6A, 6B extending somewhat convergingly from the sleeve 3 and being mutually secured at the ends adjacent the sleeve 3 by means of the transverse plate 9 and at the end adjacent the saddle 5 by means of a transverse plate 13.

Likewise the bar 8 comprises two rods or thin tubes 8A, 8B extending convergingly from the sleeve 3 towards the pedal shaft sleeve 7 and there secured at their ends to said pedal shaft sleeve, and at the end adjacent the sleeve 3 by the transverse plate 10.

A back fork 14 extends from the transverse sleeve 3 substantially in alignment with the oblique tube 2, said fork likewise comprising two rods or thin tubes 14A, 14B which are mutually secured adjacent the sleeve 3 by means of a transverse plate 15, said rods extending divergingly from the sleeve 3 and being each secured at the free ends to a plate 16.

As appears from the drawing also the rods 6 and 8 are substantially in mutual alignment.

Through the connections between the plates 9, 10 and 15 with the slots in the transverse sleeve 3 a certain pivotal movement is permitted between the rods 6, 8 and the fork 14 on the one hand and the sleeve 3 on the other hand. The rigidity of the frame is obtained by tensioning wires which, in the embodiment shown, are each time provided in a set of two wires. Thereby the steering head sleeve 1 is connected to the saddle support means 4 by two tensioning wires 17, 18 which extend mutually cross-wise as appears from fig. 4. The steering head sleeve 1 is connected to the pedal shaft sleeve 7 by two crossed-tensioning wires 19, 20, the pedal shaft sleeve 7 is connected to the plate 16 on the back fork by two tensioning wires 21, 22 which, because of the presence of the back wheel of the bicycle do not cross each other, while finally in the plate 16 is connected to the saddle attachment means 4 by two tensioning wires 23, 24. The wires 23, 24 may be substantially parallel but may also cross each other provided care is taken that the crossing point does not hinder the presence of the bicycle back wheel.

The connection of the ends of the tension wires may be a hook-in-connection as e.g. is shown for the ends of the wires 21, 22 which are connected to the plate 16. A small block 25 has been secured to the plate 16, said block having a slot 26 extending in the longitudinal direction of the wire 21, 22, the slot being open at the side remote from the plate 16. Said slot has a widened portion 27 at one end into which fits a small block 28 connected to the end of the tensioning wire through welding or soldering or in another manner. The tensioning wire may thereby be placed into the slot 26 from the lateral side, whereby the block 28 is received in the widened portion 27. Through tensioning the tensioning wire a rigid connection is obtained in that the block 28 is drawn against the end of the widened portion. All ends of all tensioning wires may be secured in this manner.

It is possible to provide a so called turnbuckle in each tensioning wire but preferably a tensioning device is only provided in both tensioning wires 23, 24 extending from the plate 16 towards the saddle support means 4. In connection with quick assembling and demounting of the bicycle it is preferable to replace the turnbuckles by a rotary locking connection (not shown). Thereby in known manner a handle, connected to a cam profile is rotated with respect to a corresponding surface of a part connected to one of the tensioning wire ends. The cam profile of the handle is connected to the end of the other tensioning wire.

The tensioning wires may be manufactured from steel, but may also be so called carbon fibres. The further frame parts likewise may be made of steel, synthetic material or other metals or combinations thereof.

## Claims

1. A bicycle frame comprising a front fork, a back fork (14), a steering head sleeve (1), a pedal shaft sleeve (7), a saddle support (4), an oblique extension means (2) of the back fork (14) which is substantially in alignment with the back fork (14) and which extends to the steering head sleeve (1), bar means (6, 8) extending from the saddle support (4) to the pedal shaft sleeve (7), connection means (3) interconnecting the bar means (6, 8) to the back fork (14) and the back fork extension means (2), tensioning wires (17—24) connecting the free ends of the bar means (6, 8) to the free end of the back fork (14) and to the steering head sleeve (1), characterized in that the back fork extension means (2) consists of an oblique tube (2) which is separated from the back fork (14), whilst the oblique tube (2), the bar means (6, 8) and the back fork (14) are at least in part interconnected by co-operating male and female members which are in condition for disengagement upon release of the tension in the wires (17—24), said connection means (3) being secured to one of the interconnected elements (2; 6, 8; 14) and being provided with longitudinal slots (11 and/or 12 and/or 15') which form the said female members, while the adjacent free ends of the other interconnected elements (2; 6, 8; 14) are provided with plates (9 and/or 10 and/or 15) which form the said male members and which are each slidably insertable in one of said slots.

2. A bicycle frame according to claim 1, characterized in that the bar means (6, 8) are divided in an upper bar means (6) and a lower bar means (8) which are substantially in alignment with each other, the oblique tube (2), the upper bar means (6), the lower bar means (8) and the back fork (14) being interconnected by said male and female members (9, 10, 15; 11, 12, 15') which are in condition for disengagement upon release of the tension in the tensioning wires (17—24) so as to separate the oblique tube (2), the upper bar means (6), the lower bar means (8) and the back fork (14) from each other.

3. A bicycle frame according to claim 2, characterized in that the upper bar means (6), the lower bar means (8) and the back fork (14) are provided with the plates (9, 10, 15) at their free ends, which plates cooperate with the slots (11, 12, 15') in the tubular sleeve (3), which is secured to the oblique tube (2).

4. A bicycle frame according to any one of the preceding claims, characterized in that the tensioning wires (17—24) are provided in couples (17—18; 19, 20; 21, 22; 23, 24) while the tensioning wires of several couples (17, 18; 19, 20; 23, 24) extend cross-wise.

5. A bicycle frame according to any one of the preceding claims, characterized in that at least one of the tensioning wires (17—24) or couples of tensioning wires (17, 18; 19, 20; 23, 24) is provided with a tensioning device (13).

6. A bicycle frame according to claim 5, characterized in that the tensioning device comprises a rotary handle, co-operating with a cam profile or with a cam follower means, respectively.

7. A bicycle frame according to any one of the preceding claims, characterized in that a tensioning means is incorporated in the connection means (3).

**Patentansprüche**

1. Fahrradrahmen mit einer Vorderradgabel, einer Hinterradgabel (14), einem Lenkkopfrohr (1), einer Tretlagerhülse (7), einer Sattelhalterung (4), einem schräg verlaufenden Rahmenelement (2), das im wesentlichen mit der Hinterradgabel (14) fluchtet und sich zwischen der Hinterradgabel (14) und dem Lenkkopfrohr (1) erstreckt, Rahmenelementen (6, 8), die sich von der Sattelhalterung (4) zur Tretlagerhülse (7) erstrecken, einem Verbindungselement (3), das die Rahmenelemente (6, 8) mit der Hinterradgabel (14) und mit dem sich von der Hinterradgabel weg erstreckenden Rahmenelement (2) verbindet und Spanndrähten (17—24), die die freien Enden der Rahmenelemente (6, 8) mit den freien Enden der Hinterradgabel (14) und dem Lenkkopfrohr (1) verbinden, dadurch gekennzeichnet, daß das die Hinterradgabel verlängernde Rahmenelement (2) als schräg verlaufendes Rohr (2) ausgebildet ist, welches von der Hinterradgabel (14) getrennt ist, während das schräg verlaufende Rohr (2), die Rahmenelemente (6, 8) und die Hinterradgabel (14) wenigstens teilweise durch männliche und weibliche Teile verbunden sind, die bei Wegfall der Spannung in den Drähten (17—24) außer Eingriff gebracht werden können, wobei das Verbindungselement (3) mit einem der damit verbundenen Rahmenelemente (2; 6, 8; 14) fest verbunden und mit länglichen Nuten (11 und/oder 12 und/oder 15') versehen ist, die die weiblichen Teile bilden, während die angrenzenden freien Enden der anderen verbundenen Elemente (2; 6, 8; 14) mit Platten (9 und/oder 10 und/oder 15) versehen sind, die die männlichen Teile bilden und die jeweils alle verschiebbar in einde der Nuten einführbar sind.

2. Fahrradrahmen nach Anspruch 1, dadurch gekennzeichnet, daß die Rahmenelemente (6, 8) in ein oberes Rahmenelement (6) und ein unteres Rahmenelement (8) aufgeteilt sind, die im wesentlichen miteinander fluchten, und daß das schräg verlaufende Rohr (2), das obere Rahmenelement (6), das untere Rahmenelement (8) und die Hinterradgabel (14) über männliche und weibliche Elemente (9, 10, 15; 11, 12, 15') miteinander verbunden sind, die voneinander lösbar sind, wenn die Spannung in den Spanndrähten (17—24) nachläßt, so daß das schrägverlaufende Rohr (2), das obere Rahmenelement (6), das untere Rahmenelement (8) und die Hinterradgabel (14) voneinander trennbar sind.

3. Fahrradrahmen nach Anspruch 2, dadurch gekennzeichnet, daß das obere Rahmenelement (6), das untere Rahmenelement (8) und die Hinterradgabel (14) an ihren freien Enden mit Platten (9, 10, 15) versehen sind, wobei diese Platten mit den Nuten (11, 12, 15') in der Hülse (3) zusammenwirken, die an dem schräg verlaufenden Rohr (2) befestigt ist.

4. Fahrradrahmen nach einem der Ansprüche 1 bis 3, dadurch gekennzeichnet, daß die Spanndrähte (17—24) paarweise (17, 18; 19, 20; 21, 22; 23, 24) ausgebildet sind, wobei die Spanndrähte einiger Paare (17, 18; 19, 20; 23, 24) kreuzweise verlaufen.

5. Fahrradrahmen nach einem der Ansprüche 1 bis 4, dadurch gekennzeichnet, daß wenigstens einer der Spanndrähte (17—24) oder eines der Spanndrahtpaare (17, 18; 19, 20; 21, 22; 23, 24) mit einem Spannelement versehen ist.

6. Fahrradrahmen nach Anspruch 5, dadurch gekennzeichnet, daß das Spannelement einen Drehbügel aufweist, der mit einem Nockenprofil oder mit Exzenterrollen zusammenwirkt.

7. Fahrradrahmen nach einem der Ansprüche 1 bis 6, dadurch gekennzeichnet, daß ein Spanndraht mit dem Verbindungselement (3) verbunden ist.

**Revendications**

1. Cadre de bicyclette comprenant une fourche avant, une fourche arrière (14), un manchon (1) de colonne de direction, un manchon (7) d'arbre de pédalier, un support de selle (4), un élément oblique (2) de prolongement de la fourche arrière (14) qui est sensiblement en alignement avec la fourche arrière (14) et qui s'étend jusqu'au manchon (1) de colonne de direction, des éléments de barre (6, 8) s'étendant du support de selle (4) au manchon (7) d'arbre de pédalier, des moyens de liaison (3) interconnectant les éléments de barre (6, 8) à la fourche arrière (14) et à l'élément (2) de prolongement de fourche arrière, des câbles de tension (17—24) reliant les extrémités libres des éléments de barre (6, 8) à l'extrémité libre de la fourche arrière (14) et au manchon (1) de colonne de direction, caractérisé en ce que l'élément (2) de prolongement de fourche arrière consiste en un tube oblique (2) qui est indépendant de la fourche arrière (14), le tube oblique (2), les éléments de barre (6, 8) et la fourche arrière (14) étant au moins en partie interconnectés par des éléments mâles et femelles associés qui sont en condition de dissociation lorsqu'on relâche la tension dans les câbles (17, 24), les moyens de liaison (3) étant fixés à l'un des éléments interconnectés (2; 6, 8; 14) et comportant des rainures longitudinales (11 et/ou 12 et/ou 15') qui constituent les dits éléments femelles, tandis que les extrémités libres adjacentes des autres éléments interconnectés (2; 6, 8; 14) comportent des plaques (9 et/ou 10 et/ou 15) qui constituent lesdits éléments mâles et qui peuvent être insérées chacune de façon coulissante dans l'une desdites rainures.

2. Cadre de bicyclette suivant la revendication 1, caractérisé en ce que les éléments de barre (6, 8) sont divisés en un élément supérieur de barre (6) et un élément inférieur de barre (8) qui sont sensiblement en alignement l'un avec l'autre, le tube oblique (2), l'élément supérieur de barre (6), l'élément inférieur de barre (8) et la fourche arrière (14) étant interconnectés par lesdits éléments mâles et femelles (9, 10, 15; 11, 12, 15') qui sont en condition de désaccouplement lorsqu'on relâche la tension dans les câbles de tension (17—24), de façon à séparer le tube oblique (2), l'élément supérieur de barre (6), l'élément inférieur de barre (8) et la fourche arrière (14) les uns des autres.

3. Cadre de bicyclette suivant la revendication 2, caractérisé en ce que l'élément supérieur de barre (6), l'élément de barre inférieur de barre (8) et la fourche arrière (14) comportent les plaques (9, 10, 15) à leurs extrémités libres, ces plaques coopérant avec les rainures (11, 12, 15') prévues dans le manchon tubulaire (3), qui est fixé au tube oblique (2).

4. Cadre de bicyclette suivant l'une quelconque des revendications précédentes, caractérisé en ce que les câbles de tension (17—24) sont prévus en paires (17, 18; 19, 20; 21, 22; 23, 24), les câbles de tension de diverses paires (17, 18; 19, 20; 23, 24) étant mutuellement croisés.

5. Cadre de bicyclette suivant l'une quelconque des revendications précédentes, caractérisé en ce qu'au moins l'un des câbles de tension (17—24) ou l'une des paires de câbles de tension (17, 18; 19, 20; 21, 22; 23, 24) comporte un dispositif (13) de mise en tension.

6. Cadre de bicyclette suivant la revendication 5, caractérisé en ce que le dispositif de mise en tension comprend une poignée tournante, coopérant avec un profil de came ou avec un palpeur de came, respectivement.

7. Cadre de bicyclette suivant l'une quelconque des revendications précédentes, caractérisé en ce qu'un dispositif de mise en tension est incorporé dans les moyens de liaison (3).

**0 034 864**

## FIG.1

## FIG.2

17,18

5

4

13

6

23,24

1

2

3

9

11

12

10

14

16

19,20

15

8

7

21,22

1

FIG.2 (DETAIL)

FIG.3

FIG.4